# EUROPEAN PATENT APPLICATION

(11) **EP 4 257 422 A1**
(43) Date of publication of application: **11.10.2023**
(21) Application number: 20922496.3
(22) Date of filing: 09.11.2020
(51) Int. Cl.: B60N 2/28, B62B 7/12, A47D 13/02

(54) **MULTIFUNCTIONAL BABY CARRYCOT**

(71) Applicant: Qingdao Wotiandi Outdoor Products Co., Ltd., Qingdao, Shandong 266400 (CN)
(72) Inventor: LIU, Runhu, Qingdao, Shandong 266400 (CN); WANG, Hongwei, Qingdao, Shandong 266400 (CN)
(74) Representative: Viering, Jentschura & Partner mbB Patent- und Rechtsanwälte
(86) International application number: PCT/CN2020/127501
(87) International publication number: WO 2022/095024

(57) **Abstract**

A multi-functional baby carrycot is provided, which relates to the technical field of baby products. The multi-functional baby carrycot includes: a carrycot; stroller supports, rotatably mounted at both sides of the carrycot and configured to support the carrycot so that the carrycot is used as a stroller, where the stroller supports can rotate with respect to the carrycot so as to be folded, so that the baby stroller is used as a safety seat; and ISOFIX hard interface devices, mounted at the bottom of the carrycot, and connected to a car seat when the baby stroller is used as the safety seat. The ISOFIX hard interface devices are mounted at the bottom of the carrycot, and can rotate with respect to the carrycot so as to be folded at one side of the carrycot or unfolded outwards. By use of the foregoing technical solutions, the present disclosure achieves the advantages of diverse functions, easy operation, high safety, and meeting the latest international certification standards ECER129 for child safety seats.

## Description

### FIELD OF THE DISCLOSURE

The present disclosure relates to the technical field of baby products, and more particularly, to a multi-functional baby carrycot.

### BACKGROUND OF THE DISCLOSURE

Babies are a special group which has attracted attention from all aspects of the society. Due to the great concern for the babies, there are increasingly higher requirements for children's products. Baby strollers, baby carrycots, and infant car seats are essential tools for the babies to travel with cars.

For families whose babies travel with the car, they need to be equipped with both a safety seat and a baby stroller when traveling, and also need to carry other baby accessories, making it difficult to go out. In addition, more objects take up larger space in the car, bringing a lot of inconveniences to the family.

In addition, the existing baby carrycot is mounted in two manners: 1. connection via the base of the safety seat; and 2. directly using the safety belt. The first manner uses an auxiliary product of the baby carrycot, which needs to be mounted on the car seat in advance. However, such a product has a large size and it is inconvenient to implement mounting, greatly increasing the use cost. The second manner uses the safety belt to directly hold the baby carrycot on the car seat. Such a flexible connection cannot prevent the baby carrycot from sliding sideways, cannot resist collisions from the side, lacks protection against side impacts, and has the risk of mounting and operation errors. Due to these reasons, the second manner does not meet the international ECER129 "Uniform Provisions for the Approval of Enhanced Child Restraint Systems for Use in Motor Vehicles". Therefore, the existing baby carrycot needs to be improved.

### SUMMARY OF THE DISCLOSURE

In view of the shortcomings and deficiencies in the prior art, the present disclosure aims to provide a multi-functional baby carrycot, which can serve as a baby stroller, a safety seat, and a baby carrycot; and has the advantages of multiple functions, easy connection to the car seat, high safety, and meeting the latest international certification standards ECER129 for child safety seats.

To achieve the foregoing objective, the present disclosure adopts the following technical solutions: A multi-functional baby carrycot is provided, which includes: a carrycot; stroller supports, rotatably mounted at both sides of the carrycot and configured to support the carrycot so that the carrycot is used as a stroller, where the stroller supports can rotate with respect to the carrycot so as to be folded, so that the carrycot is used as a safety seat; and ISOFIX hard interface devices, mounted at the bottom of the carrycot.

The ISOFIX hard interface devices are mounted at the bottom of the carrycot, and can rotate with respect to the carrycot so as to be folded at one side of the carrycot or unfolded outwards.

Each ISOFIX hard interface device includes: a mounting casing, fixedly mounted on the carrycot; a folding limiting structure, rotatably mounted on the mounting casing; an ISOFIX hard interface, mounted to the folding limiting structure, and being rotatable with respect to the mounting casing so as to be folded or unfolded outwards; and a first locking assembly, disposed between the mounting casing and the folding limiting structure; and configured to lock or unlock the folding limiting structure so that the ISOFIX hard interface remains unfolded or is folded.

A first fastening hole and a second fastening hole are provided at an interval along a circumferential direction at one side of the folding limiting structure. The first locking assembly includes: a first locking piece, slidably mounted on the mounting casing, and configured to slide with respect to the mounting casing so as to be snapped with the first fastening hole or the second fastening hole; a first elastic member, one end of which is mounted at an end of the first locking piece that is away from the folding limiting structure and the other end abuts against an inner wall of the mounting casing, and configured to provide a driving force for driving the first locking piece to slide; and a pushed button, passing through a first straight slot and mounted on the first locking piece, used for a user to operate, and driving the first locking piece to slide away from the first fastening hole or the second fastening hole so as to unlock the folding limiting structure.

A protruding portion is disposed on one end of the folding limiting structure, and a second elastic member is sleeved outside the protruding portion; one end of the second elastic member is fixedly mounted on the folding limiting structure, and the other end of the second elastic member is fixedly mounted on the mounting casing; and the second elastic member is configured to provide a driving force for automatically unfolding or folding the ISOFIX hard interfaces.

Each stroller support includes a front wheel; a back wheel; a first support rod, mounted on the front wheel at one end; a second support rod, mounted on the back wheel at one end, and rotatably mounted to the first support rod and the carrycot at the other end; and a second locking assembly, mounted on the carrycot; and configured to unlock the first support rod and the second support rod so that they rotate with respect to the carrycot, or to lock the first support rod and the second support rod so that they maintain a folded or support state.

A fourth fastening hole and a fifth fastening hole are provided at an interval on one end of the first support rod that is away from the front wheel, a sixth fastening hole and a seventh fastening hole are provided on the second support rod, and the carrycot is provided with a first slide groove corresponding to the fourth fastening hole. The second locking assembly includes: a second locking piece, slidably mounted in the first slide groove, and capable of being snapped with the fourth fastening hole and the sixth fastening hole or in the fifth fastening hole and the seventh fastening hole so that the first support rod and the second support rod maintain the support or folded state; a third elastic member, one end of which is mounted at a side of the second locking piece that is away from the fourth fastening hole, and the other end abuts against an inner wall of the first slide groove; a projection, fixedly mounted at an end of the second locking piece adjacent to the opening of the first slide groove; a first slider, slidably mounted on the carrycot, abutting against the projection, and configured to slide with respect to the carrycot so as to drive the projection to move; a first dragging rope, connected to the first slider; and a first button, mounted on the carrycot, connected to the first dragging rope, and used for the user to operate so as to lift the first dragging rope and drive the first slider.

The carrycot includes a seat which is transversely provided with a second through hole; a fixed shaft, passing through the second through hole and mounted on the carrycot; a handle, rotatably mounted on the fixed shaft; and a third locking assembly, partially disposed on the fixed shaft and partially disposed on the handle, and configured to lock or unlock the handle so that the handle maintains at a specific angle or is subjected to angle adjustment.

The third locking assembly includes: a fixing disk mounted on the fixed shaft, and provided with a third arc-shaped groove and an eighth fastening hole communicated with the third arc-shaped groove; a third locking piece, mounted on the handle corresponding to the eighth fastening hole, and capable of being snapped with or disengaged from the eighth fastening hole so as to lock or unlock the handle; a rotary knob, mounted on the handle, and used for the user to operate so as to drive the third locking piece to be disengaged from the eighth fastening hole to unlock the handle; a transmission assembly, connected to the rotary knob at one end and connected to the third locking piece at the other end; and a fourth elastic member, mounted between the third locking piece and the fixed shaft at one end, and configured to reset the third locking piece under the effect of its own restoring force.

The transmission assembly includes: a lifting lever, fixedly mounted on the third locking piece and provided with ninth fastening holes; a cover shell, sleeved outside the lifting lever; a second slider, slidably mounted on the cover shell; a clasp, mounted on the second slider and capable of being snapped with the ninth fastening hole; a third dragging rope, connected onto the rotary knob at one end, and connected onto the second slider at the other end; and a fifth elastic member, mounted between the second slider and the cover shell, and configured to reset the second slider under the effect of its own restoring force; where when rotated, the rotary knob drives the third dragging rope to move, so as to draw the second slider to make it slide with respect to the cover shell; then, the second slider drives the clasp to slide towards the lifting lever so that the clasp is snapped with the ninth fastening hole p, to lift up the lifting lever; and thus, the third locking piece is lifted to unlock the handle.

The present disclosure achieves the following beneficial effects after using the foregoing technical solutions: During use, the present disclosure has three use status: a baby stroller, a safety seat, and a baby carrycot. When the present disclosure is used as the safety seat, the pushed buttons are pulled towards a side away from the ISOFIX hard interfaces to unlock the first locking pieces, so that the ISOFIX hard interfaces are unfolded for use. Then the ISOFIX hard interfaces are connected to interfaces of a car seat, and finally, the carrycot is further fastened by using the safety belt on the car, thus completing mounting and achieving easy installation. Moreover, the carrycot can be avoided from lateral or forward shift and rollover due to different external forces during travelling, and the use of the safety belt on the car can avoid the "baby carrycot" from jumping up and down during travelling, thus having the advantages of multiple functions, easy connection to the car seat, and high safety.

### BRIEF DESCRIPTION OF THE DRAWINGS

To describe the technical solutions in the embodiments of the present disclosure or in the prior art more clearly, the following briefly introduces the accompanying drawings required for describing the embodiments or the prior art. Apparently, the accompanying drawings in the following description show merely some embodiments of the present disclosure, and those of ordinary skill in the art may still derive other drawings from these accompanying drawings without creative efforts.

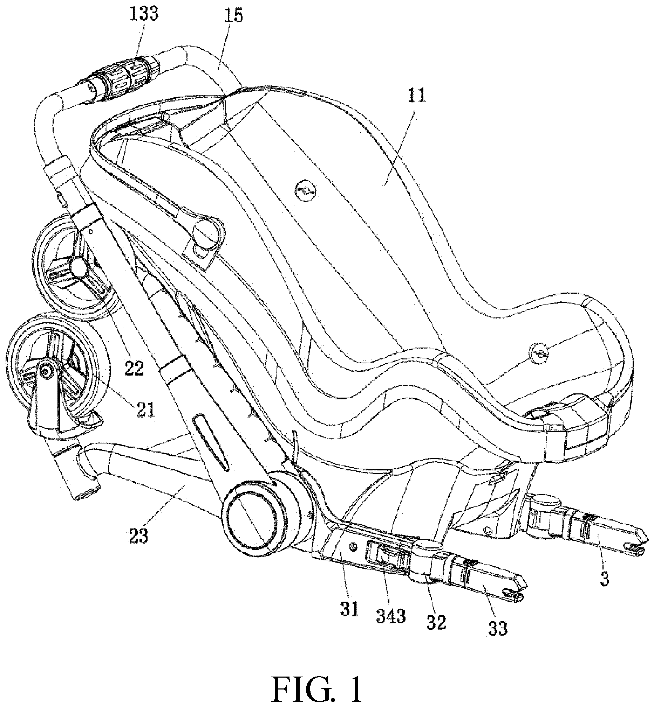

FIG. 1 is a first schematic structural diagram of a use status of the present disclosure serving as a safety seat;

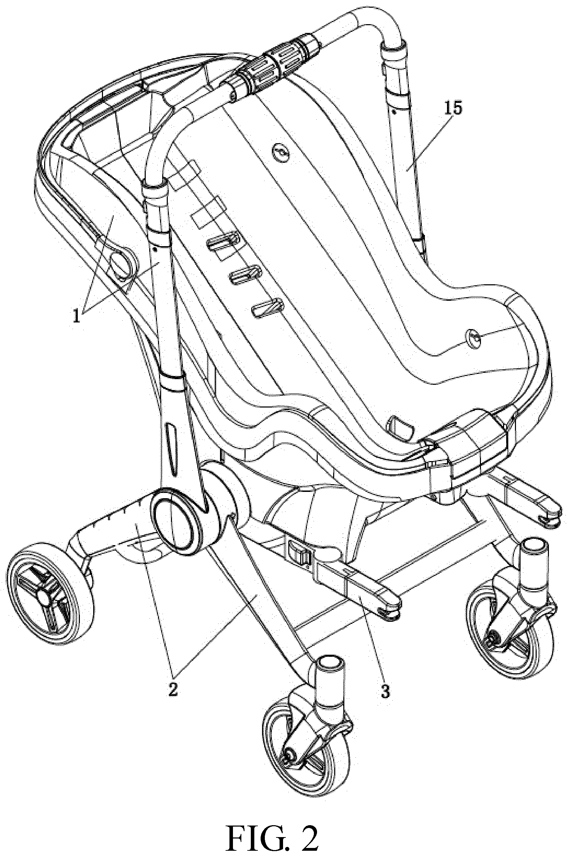

FIG. 2 is a schematic structural diagram of a use status of the present disclosure serving as a baby stroller;

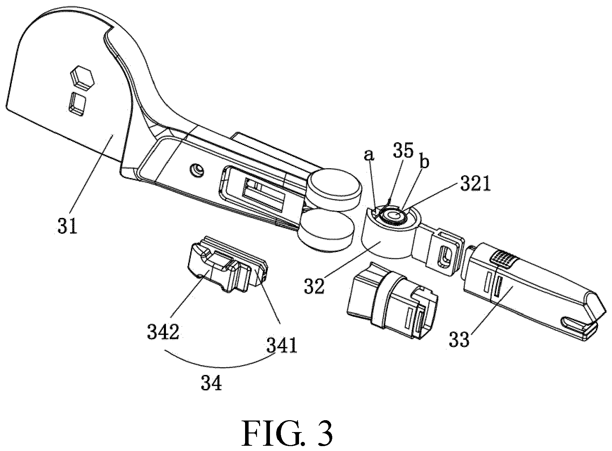

FIG. 3 is a schematic structural diagram of an ISOFIX hard interface device in the present disclosure;

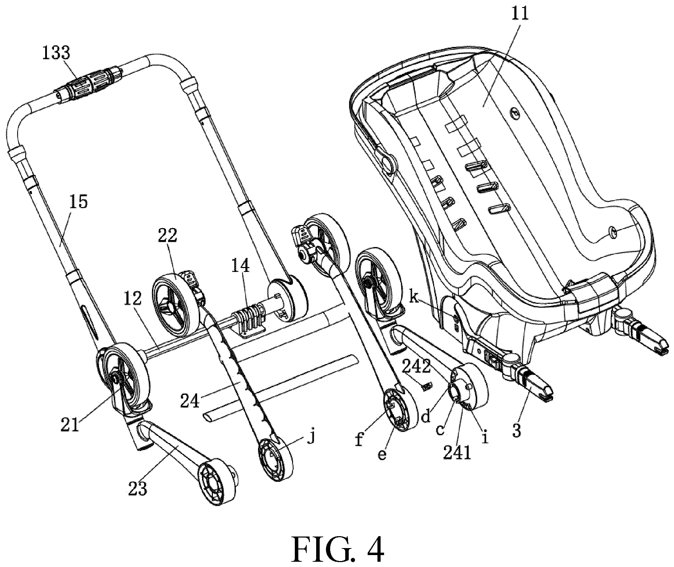

FIG. 4 is an exploded diagram of FIG. 1;

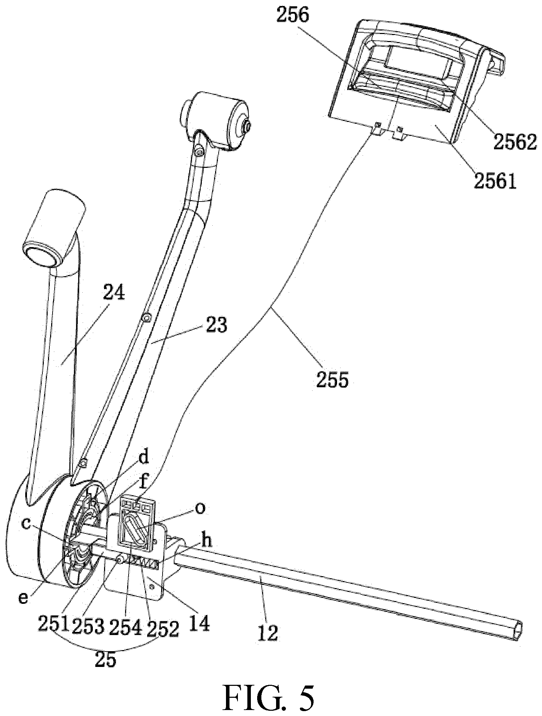

FIG. 5 is a schematic structural diagram of a first support rod, a second support rod, a second locking assembly, and a fixed shaft in the present disclosure;

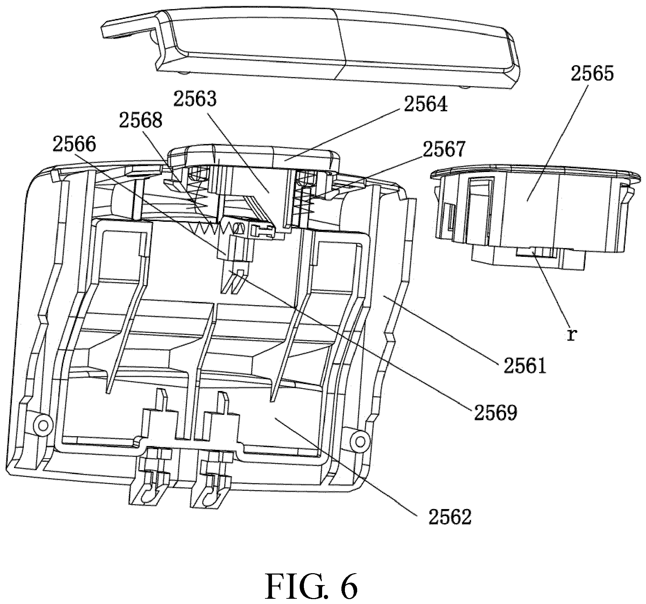

FIG. 6 is a schematic structural diagram of a first button in the present disclosure;

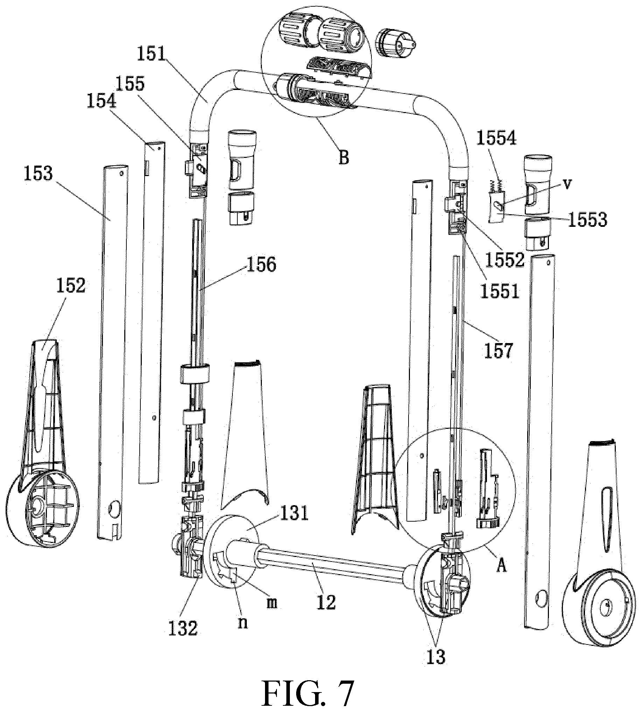

FIG. 7 is a schematic structural diagram of a third locking assembly, a fixed shaft, and a lifting lever in the present disclosure;

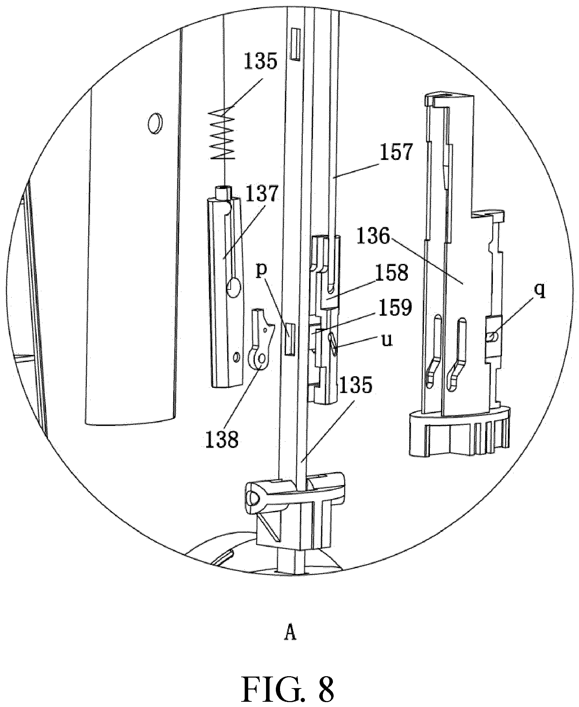

FIG. 8 is an enlarged diagram of a detail A in FIG. 7;

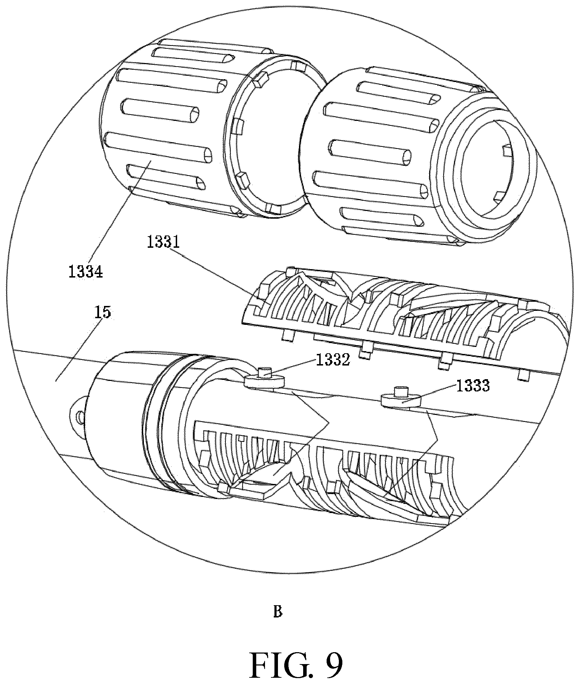

FIG. 9 is an enlarged diagram of a detail B in FIG. 7; and

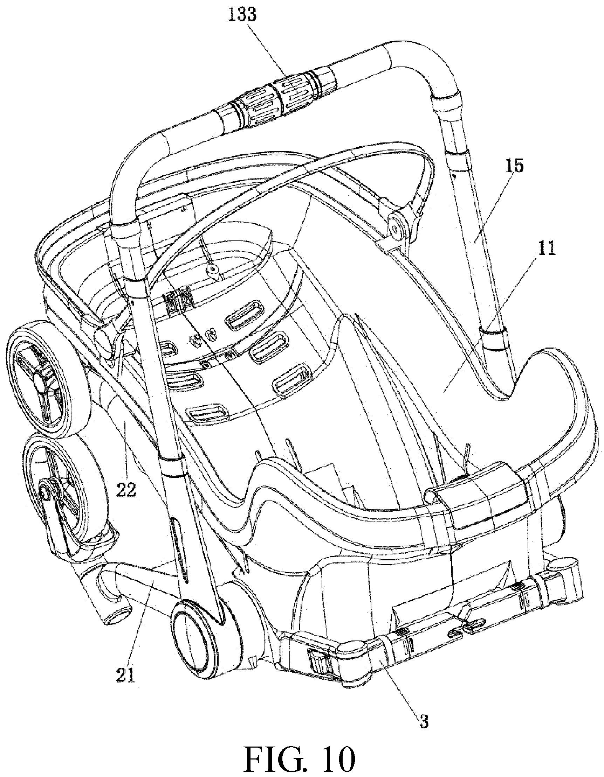

FIG. 10 is a second schematic structural diagram of a use status of the present disclosure serving as a safety seat.

Meanings of numerals: 1. Carrycot, 11. Seat, 12. Fixed shaft, 13. Third locking assembly, 131. Fixing disk, 132. Third locking piece, 133. Rotary knob, 1331. Rotation portion, 1332. First slide rod, 1333. Second slide rod, 1334. Anti-slide sleeve, 134. Fourth elastic member, 135. Lifting lever, 136. Cover shell, 137. Second slider, 138. Clasp, 139. Third dragging rope, 130. Fifth elastic member, 14. Mounting piece, 15. Handle, 151. Hand bar, 152. Outer shell, 153. Fixed sleeve rod, 154. Extendable sleeve rod, 155. Second button, 1551. Assembly casing, 1552. Second pressed portion, 1553. Fifth slider, 1554. Tenth elastic member, 156. Guide rod, 157. Pull rod, 158. Fourth slider, 159. Fourth locking piece, 2. Stroller support, 21. Front wheel, 22. Back wheel, 23. First support rod, 24. Second support rod, 241. Ninth elastic member, 242. Compressing block, 25. Second locking assembly, 251. Second locking piece, 252. Third elastic member, 253. Projection, 254. First slider, 255. First dragging rope, 256. First button, 2561. Fixed casing, 2562. Prodded piece, 2563. Pushed piece, 2564. First pressed portion, 2565. Mounting portion, 2566. Third slider, 2567. Seventh elastic member, 2568. Eighth elastic member, 2569. Limiting piece, 3. ISOFIX hard interface device, 31. Mounting casing, 32. Folding limiting structure, 321. Protruding portion, 33. ISOFIX hard interface, 34. First locking assembly, 341. First locking piece, 342. First elastic member, 343. Pushed button, 35. Second elastic member, a. First fastening hole, b. Second fastening hole, c. Fourth fastening hole, d. Fifth fastening hole, e. Sixth fastening hole, f. Seventh fastening hole, h. First slide groove, i. First arc-shaped groove, j. Second arc-shaped groove, k. Second through hole, m. Third arc-shaped groove, n. Eighth fastening hole, o. First tilted slot, p. Ninth fastening hole, q. Transverse slot, r. Second slide groove, s. First arc-shaped slide groove, t. Second arc-shaped slide groove, u. Second tilted slot, v. Third tilted slot

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be configured to describe various components, signals or the like, which are for distinguishing one component/signal from another one only, and are not intended to, nor should be construed to impose any substantive limitations on the components, signals or the like.

The present disclosure is further described in detail below with reference to the accompanying drawings.

The specific embodiment merely explains the present disclosure, and is not intended to limit the present disclosure. Those skilled in the art can, after reading this specification, make modifications to this embodiment as needed without creative contribution, which are all protected by the patent law as long as falling within the scope of the claims.

This embodiment relates to a multi-functional baby carrycot 1, which includes a carrycot 1, stroller supports 2, and ISOFIX hard interface devices 3. The stroller supports 2 are rotatably mounted at both sides of the carrycot 1 near the bottom end. During use, the stroller supports 2 can rotate with respect to the carrycot 1 so as to be in a support state or folded state. When the stroller supports 2 are in the folded state, the multi-functional baby carrycot 1 of the present disclosure serves as the carrycot 1 or a safety seat 11; and when the stroller supports 2 are in the support state, the multi-functional baby carrycot serves as a baby stroller. The ISOFIX hard interface devices 3 are mounted at the bottom of the carrycot 1; and protrude from the carrycot 1 in use and are connected to a car seat.

It should be noted that, during folding of the stroller supports 2, the stroller supports 2 rotate with respect to the carrycot 1 to be folded. The lowest sections of the folded stroller supports 2 are flush with or higher than the bottom of the carrycot 1, so that the baby stroller can serve as the safety seat 11 and can be steadily placed in use.

Further, the ISOFIX hard interface devices 3 are mounted at the bottom of the carrycot 1, and can rotate with respect to the carrycot 1 so as to be folded at one side of the carrycot 1 or unfolded outwards.

Each ISOFIX hard interface device 3 includes a mounting casing 31, a folding limiting structure 32, an ISOFIX hard interface 33, and a first locking assembly 34.

One end of the mounting casing 31 is fixedly mounted on the carrycot 1 via a screw, and the other end of the second elastic member 35 is disposed with two spaced clamping portions along a direction perpendicular to the ground. The folding limiting structure 32 is rotatably mounted on the two clamping portions via a rotation shaft.

The ISOFIX hard interface 33 is clamped to the folding limiting structure 32. When the ISOFIX hard interface 33 is driven, the folding limiting structure 32 rotates about the rotation shaft, so that the ISOFIX hard interface 33 rotates with respect to the mounting casing 31 so as to be folded or unfolded outwards for use. The first locking assembly 34 is disposed between the mounting casing 31 and the folding limiting structure 32; and is configured to lock or unlock the folding limiting structure 32 so that the ISOFIX hard interface 33 remains unfolded or is folded.

Further, the first locking assembly 34 includes a first locking piece 341, a first elastic member 342, and a pushed button 343.

A first fastening hole a is provided at one side of the folding limiting structure 32, and the inner cavity of the mounting casing 31 is communicated with the first fastening hole a on the folding limiting structure 32. The first locking piece 341 is slidably mounted in the inner cavity of the mounting casing 31, and configured to slide with respect to the mounting casing 31 so as to be snapped with the first fastening hole a, thus locking the folding limiting structure 32 to prevent arbitrary rotation. The pushed button 343 passes through a first straight slot in the mounting casing 31 and is clamped in a first through hole on the first locking piece 341. The pushed button 343 is used for a user to operate so as to drive the first locking piece 341 to slide away from the first fastening hole a to unlock the folding limiting structure 32. One end of the first elastic member 342 is mounted at an end of the first locking piece 341 that is away from the folding limiting structure 32, and the other end thereof abuts against an inner wall of the mounting casing 31. The first elastic member 342 is configured to provide a driving force for resetting the first locking piece 341. Preferably, the first elastic member 342 is a spring.

Further, a second fastening hole b is provided at a lateral side of the folding limiting structure 32, and is configured to be engaged with the first locking piece 341 when the ISOFIX hard interface 33 is in a folded state and enable the ISOFIX hard interface 33 to remain folded. Preferably, an included angle between the first fastening hole a and the second fastening hole b is 90 degrees.

A protruding portion 321 is disposed on one end of the folding limiting structure 32, and a second elastic member 35 is sleeved outside the protruding portion 321. One end of the second elastic member 35 is fixedly mounted on the folding limiting structure 32, and the other end thereof is fixedly mounted on the mounting casing 31. The second elastic member 35 is configured to provide a driving force for automatically folding the ISOFIX hard interfaces 33. Preferably, the protruding portion 321 is shaped like a cylinder and the second elastic member 35 is a torsion spring.

Each stroller support 2 includes a front wheel 21, a back wheel 22, a first support rod 23, a second support rod 24, and a second locking assembly 25.

The two front wheels 21 and the two back wheels 22 are respectively disposed at the two sides of the carrycot 1. One end of the first support rod 23 is mounted on the front wheel 21, and the other end thereof is rotatably mounted to the second support rod 24. One end of the second support rod 24 is mounted on the back wheel 22, and the other end thereof is rotatably mounted to the carrycot 1. The second locking assembly 25 is partially mounted on the carrycot 1 and partially mounted on the first support rod 23. The second locking assembly 25 is configured to unlock the first support rod 23 and the second support rod 24, so that they rotate with respect to the carrycot 1 to be in a folded or support state; or to lock the first support rod 23 and the second support rod 24 so that they maintain the folded or support state.

The second locking assembly 25 includes a second locking piece 251, a third elastic member 252, a projection 253, a first slider 254, a first dragging rope 255, and a first button 256.

A fourth fastening hole c and a fifth fastening hole d are provided at an interval on the end of the first support rod 23 that is away from the front wheel 21; and a sixth fastening hole e and a seventh fastening hole f are provided on the second support rod 24. The interval between the sixth fastening hole e and the seventh fastening hole f and the interval between the fourth fastening hole c and the fifth fastening hole d are corresponding to rotation angles of the first support rod 23 and the second support rod 24. When the first support rod 23 and the second support rod 24 are in the support state, the sixth fastening hole e communicates with the fourth fastening hole c; and when the first support rod 23 and the second support rod 24 are in the folded state, the seventh fastening hole f communicates with the fifth fastening hole d. A mounting piece 14 is fixedly mounted on the carrycot 1, and is provided with a first slide groove h corresponding to the fourth fastening hole c. The second locking piece 251 is slidably mounted in the first slide groove h, and can be snapped with the fourth fastening hole c and the sixth fastening hole e so that the first support rod 23 and the second support rod 24 maintain the support state. When the second locking piece 251 is snapped with the fifth fastening hole d and the seventh fastening hole f, the first support rod 23 and the second support rod 24 maintain the folded state.

One end of the third elastic member 252 is mounted at a side of the second locking piece 251 that is away from the fourth fastening hole c, and the other end thereof abuts against an inner wall of the first slide groove h. The projection 253 is fixedly mounted at the end of the second locking piece 251 adjacent to the opening of the first slide groove h. The first slider 254 is slidably mounted on the carrycot 1, and is disposed with a first tilted slot o into which the projection 253 can be inserted so that the second locking piece 251 is driven to slide when the first slider 254 slides. The first tilted slot o tilts towards an end away from the first support rod 23. The first dragging rope 255 is connected to the first slider 254. The first button 256 is mounted on the carrycot 1 and connected to the first dragging rope 255. The first button 256 is used for the user to operate so as to lift the first dragging rope 255 and drive the first slider 254. When the first button 256 is pressed, the first dragging rope 255 pulls the first slider 254 to enable the first slider to slide towards a side away from the first support rod 23, and in this case, the projection 253 drives the second locking piece 251 to slide towards an end away from the first support rod 23 along the first tilted slot o. As a result, the second locking piece 251 is disengaged from the fourth fastening hole c and the sixth fastening hole e, or from the fifth fastening hole d and the seventh fastening hole f, thus unlocking the first support rod 23 and the second support rod 24.

Further, the first button 256 includes a fixed casing 2561, a prodded piece 2562, a pushed piece 2563, and a locking stop assembly.

The fixed casing 2561 is clamped at the back side of the seat 11, and a third through hole is provided on a side of the fixed casing 2561 that is away from the seat 11. The prodded piece 2562 corresponds to the third through hole and is slidably mounted between the fixed casing 2561 and the seat 11; and a hole for connection of a third dragging rope 139 is provided on the prodded piece 2562. The prodded piece 2562 is used for the user to prod so as to lift the third dragging rope 139 to pull a second slider 137.

The first support rod and the second support rod 24 may be unlocked by an incorrect operation to implement switch between a folded state and a support state, causing trouble or a safety incident. In order to avoid this situation, a rotary knob 133 further includes a locking stop assembly which corresponds to the prodded piece 2562 and is mounted on the seat 11. The locking stop assembly includes a first pressed portion 2564, a mounting portion 2565, a third slider 2566, a seventh elastic member 2567, and an eighth elastic member 2568.

The mounting portion 2565 is clamped onto the seat 11, and is internally provided with a second slide groove r. The third slider 2566 is slidably mounted in the second slide groove r at one end, and abuts against a limiting piece 2569 at the other end, where the limiting piece 2569 is disposed on the prodded piece 2562. A pushed piece 2563 extending towards the limiting piece 2569 is disposed on the bottom of the first pressed portion 2564, and has a slope which abuts against a third slider 2566, where the slope tilts from the first pressed portion 2564 and away from a side where the third slider 2566 slides away from the limiting block 2569. The two ends of the seventh elastic member respectively abut against the bottoms of the first pressed portion 2564 and the mounting portion 2565. There are two seventh elastic members which are symmetrically disposed at the two sides of the pushed piece 2563 and configured to reset the first pressed portion 2564. The two ends of the eighth elastic member 2568 respectively abut against the third slider 2566 and the second slide groove r, and the eighth elastic member 2568 is configured to reset the third slider 2566. Preferably, the seventh elastic members 2567 and the eighth elastic member 2568 are spiral springs.

In an initial state, the limiting piece 2569 abuts against the slider to achieve locking of the prodded piece 2562. When the first pressed portion 2564 is pressed, the seventh elastic members 2567 are compressed, and the pushed piece 2563 moves towards the slide groove. Under the effect of the slope on the pushed piece 2563, the third slider 2566 slides away from the limiting piece 2569, and the eighth elastic member 2568 is compressed to unlock the prodded piece. When the first pressed portion 2564 is released, the first pressed portion 2564 and the third slider 2566 are reset under the effect of the restoring force of the seventh elastic members 2567 and the eighth elastic member 2568, to lock the prodded piece once again.

Further, an end of the second support rod 24 adjacent to the carrycot 1 is a round plate. An end of the round plate adjacent to the first support rod 23 is disposed with a first arc-shaped groove i concentric with the round plate, and a ninth elastic member 241 is mounted in the first arc-shaped groove i. One end of the elastic member is sleeved on a pillar at one end of the first arc-shaped groove i, and the other end thereof is movably mounted on a compressing block 242 on the inner wall at the other end of the first arc-shaped groove i. One end of the compressing block 242 is inserted in the first support rod 23. When the second support rod 24 rotates with respect to the first support rod 23 to realize folding, the compressing block 242 slides in the first arc-shaped groove i to compress the ninth elastic member 241. When unlocked from the second locking piece 251, the second support rod 24 is automatically unfolded under the effect of the spring. The round plate is further fixedly disposed with a second pillar, and a second arc-shaped groove j corresponding to the second pillar is provided on the first support rod 23. The second pillar is slidably disposed in the second arc-shaped groove j and configured to limit an angle of rotation of the second support rod 24 with respect to the first support rod 23.

The carrycot 1 includes the seat 11, a fixed shaft 12, a handle 15, and a third locking assembly 13.

The seat 11 is transversely provided with a second through hole k, the fixed shaft 12 passes through the second through hole k and is mounted on the carrycot 1, and the handle 15 is rotatably mounted on the fixed shaft 12. The third locking assembly 13 is partially disposed on the fixed shaft 12 and partially disposed on the handle 15. The third locking assembly 13 is configured to lock or unlock the handle 15.

The third locking assembly 13 includes a fixing disk 131, a third locking piece 132, a rotary knob 133, a transmission assembly, and a fourth elastic member 134.

The fixing disk 131 is mounted on the fixed shaft 12, and is provided with a third arc-shaped groove m and an eighth fastening hole n communicated with the third arc-shaped groove m. The third locking piece 132 corresponds to the eighth fastening hole n and is mounted on the handle 15; and can be snapped with or disengaged from the eighth fastening hole n so as to lock or unlock the handle 15. The rotary knob 133 is mounted on the handle 15, and is used for the user to operate so as to drive the third locking piece 132 to be disengaged from the eighth fastening hole n to unlock the handle 15. The transmission assembly is connected to the rotary knob 133 at one end, and is connected to the third locking piece 132 at the other end. The fourth elastic member 241 is mounted between the third locking piece 132 and the fixed shaft 12 at one end, and configured to reset the third locking piece 132 under the effect of its own restoring force.

The transmission assembly includes a lifting lever 135, a cover shell 136, a second slider 137, a clasp 138, a third dragging rope 139, a fifth elastic member 130, and a sixth elastic member.

The lifting lever 135 is fixedly mounted on the third locking piece 132 via a screw, and is provided with a plurality of equally spaced ninth fastening holes p. The cover shell 136 is sleeved outside the lifting lever 135, and the second slider 137 is slidably mounted on the cover shell 136. The clasp 138 is rotatably mounted on the second slider 137 via a rotation shaft, and can be snapped with the ninth fastening hole p. The sixth elastic member is sleeved on the rotation shaft; and is fixed to the clasp 138 at one end and fixed to the second slider 137 at the other end. The sixth elastic member is configured to drive the clasp 138 to be snapped with the ninth fastening hole p under effect of its own restoring force. Specifically, the sixth elastic member is a torsion spring. The third dragging rope 139 is connected onto the rotary knob 133 at one end, and is connected onto the second slider 137 at the other end. The fifth elastic member 130 is mounted between the second slider 137 and the cover shell 136, and is configured to reset the second slider 137 under the effect of its own restoring force. The fifth elastic member 130 is a spiral spring. When rotated, the rotary knob 133 drives the third dragging rope 139 to move, so as to draw the second slider 137 to make it slide with respect to the cover shell 136. Then, the second slider 137 drives the clasp 138 to slide towards the lifting lever 135 so that the clasp 138 is snapped with the ninth fastening hole p, to lift up the lifting lever 135. Thus, the third locking piece 132 is lifted to unlock the handle 15.

Further, the handle 15 includes a hand bar 151 and a telescopic rod. There are two telescopic rods which are mounted on the fixed shaft 12 and rotatably disposed on the first support rod 23. The hand bar 151 is disposed between the two telescopic rods and used for the user to hold.

Each telescopic rod includes an outer shell 152, a fixed sleeve rod 153, an extendable sleeve rod 154, a fourth locking assembly, and a second button 155.

The outer shell 152 is rotatably mounted on the second support rod 24. The fixed sleeve rod 153 is inserted in the outer shell, with one end being sleeved outside the third locking piece 132 and clamped to the third locking piece 132. The fixed sleeve rod 153 is provided with a retreat groove corresponding to the third locking piece 132, and is further provided with a hole for the fixed shaft 12 to pass through. The extendable sleeve rod 154 is slidably mounted in the fixed sleeve rod 153 to realize length adjustment. One end of the extendable sleeve rod 154 is fixedly mounted on the cover shell 136, and the other end thereof is mounted on the hand bar 151. The fourth locking assembly is disposed in the extendable sleeve rod 154 and configured to lock or unlock the extendable sleeve rod 154. The second button 155 is disposed at the end near the hand bar 151 in the telescopic rod, and is used for the user to operate so as to drive the fourth locking assembly.

The fourth locking assembly includes a guide rod 156, a pull rod 157, a fourth slider 158, and a fourth locking piece 159.

The lifting lever 135 is disposed with a fixed block between the third locking piece 132 and the cover shell 136 via a screw. One end of the guide rod 156 is fixedly mounted on the fixed block; and the guide rod 156 is partially sleeved on the lifting lever 135 and is provided with a plurality of equally spaced limiting holes along a radial direction. The fourth slider 158 corresponds to the guide rod 156 and is slidably mounted on the cover shell 136. The fourth slider 158 is provided with a second tilted slot u, and the cover shell 136 is provided with a transverse slot q corresponding to the limiting hole and the second tilted slot u. The fourth locking piece 159 passes through the transverse slot q and the second tilted slot u successively via a rotation shaft. The pull rod 157 is connected to the fourth slider 158 at one end and connected to the second button 155 at the other end. When the second button 155 is pressed, the pull rod 157 draws the fourth slider 158 to slide in the cover shell 136, and then the fourth locking piece 159 slides with respect to the transverse slot q under the effect of the second tilted slot u so as to be inserted in or get out of the limiting hole, thus realizing locking or unlocking of the extendable sleeve rod 154.

The second button 155 includes an assembly casing 1551, a second pressed portion 1552, a fifth slider 1553, and a tenth elastic member 1554.

The assembly casing 1551 is clamped onto the hand bar 151 and is disposed in the extendable sleeve rod 154. One end of the second pressed portion 1552 is slidably mounted in the assembly casing 1551, and the other end thereof protrudes out of the extendable sleeve rod 154 so that the user can press it. The second pressed portion 1552 is disposed with a protrusion. The fifth slider 1553 is slidably mounted on the assembly casing 1551, and is connected to the pull rod 157. The fifth slider 1553 is provided with a third tilted slot v corresponding to the protrusion, and the protrusion is movably disposed in the third tilted slot v. The tenth elastic member 1554 is a spring, and the two ends of the spring respectively abut against the fifth slider 1553 and the assembly casing 1551. When pressed, the second pressed portion 1552 is recessed and pushes the fifth slider 1553 to move towards a side away from the fourth locking assembly, thus driving the fourth slider 158 to slide upwards. When the second pressed portion 1552 is released, the fifth slider 1553 is reset under the effect of the spring.

Further, the rotary knob 133 includes: a rotation portion 1331, a first slide rod 1332, a second slide rod 1333, and a slip-proof sleeve 1334.

The rotation portion 1331 is rotatably mounted on the handle 15, and is externally disposed with the slip-proof sleeve 1334. The rotation portion 1331 and the handle 15 are provided with a first arc-shaped slide groove s and a second arc-shaped slide groove t. The first arc-shaped slide groove s and the second arc-shaped slide groove t are symmetrically disposed at the two ends of the rotation portion 1331 along a radial direction. There are two first arc-shaped slide grooves s and two second arc-shaped slide grooves t, which are symmetrically disposed along the axis. The first slide rod 1332 is slidably mounted in the first arc-shaped slide groove s, and the second slide rod 1333 is slidably mounted in the second arc-shaped slide groove t. The third dragging ropes 139 disposed at the two sides are connected to the first slide rod 1332 and the second slide rod 1333 respectively. When the rotation portion is rotated, the first slide rod 1332 and the second slide rod 1333 in their respective arc-shaped slide grooves slide towards the sides close to each other, so as to pull the third dragging ropes 139 to move.

The working principle of the present disclosure is roughly described as follows: During use, the present disclosure has three use status: a baby stroller, a safety seat 11, and a baby carrycot 1. When the present disclosure is used as the safety seat 11, the pushed buttons 343 are pulled towards a side away from the ISOFIX hard interfaces 33 to unlock the first locking pieces 341, so that the ISOFIX hard interfaces 33 are unfolded for use. Then the ISOFIX hard interfaces are connected to interfaces of a car seat, and finally, the carrycot 1 is further fastened by using the safety belt on the car, thus completing mounting and achieving easy installation. Moreover, the carrycot 1 can be avoided from lateral or forward shift and rollover due to different external forces during travelling, and the use of the safety belt on the car can avoid the "baby carrycot 1" from jumping up and down during travelling, thus having the advantages of multiple functions, easy connection to the car seat 11, high safety, and meeting the latest international certification standards ECER129 for child safety seats.

The above merely describes, rather than limiting, the technical solution of the present disclosure. Other modifications or equivalent substitutions made by persons of ordinary skill in the art to the technical solution of the present disclosure shall all fall within the scope of the claims of the present disclosure as long as they do not depart from the spirit and scope of the technical solution of the present disclosure.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A multi-functional baby carrycot (1), comprising:
a carrycot (1);
stroller supports (2) rotatably mounted at both sides of the carrycot (1) and configured to support the carrycot (1) so that the carrycot is used as a stroller, wherein the stroller supports (2) are rotatable with respect to the carrycot (1) so as to be folded, so that the carrycot (1) is used as a safety seat (11); and
ISOFIX hard interface devices (3) mounted at a bottom of the carrycot (1).

2. The multi-functional baby carrycot (1) according to claim 1, wherein the ISOFIX hard interface devices (3) are rotatable with respect to the carrycot (1) so as to be folded at one side of the carrycot (1) or unfolded outwards.

3. The multi-functional baby carrycot (1) according to claim 2, wherein each ISOFIX hard interface device (3) comprises:
a mounting casing (31) fixedly mounted on the carrycot (1);
a folding limiting structure (32) rotatably mounted on the mounting casing (31);
an ISOFIX hard interface (33) mounted to the folding limiting structure (32), and being rotatable with respect to the mounting casing (31) so as to be folded or unfolded outwards; and
a first locking assembly (34) disposed between the mounting casing (31) and the folding limiting structure (32) and configured to lock or unlock the folding limiting structure (32) so that the ISOFIX hard interface (33) remains unfolded or is folded.

4. The multi-functional baby carrycot (1) according to claim 3, wherein a first fastening hole (a) and a second fastening hole (b) are provided at an interval along a circumferential direction at one side of the folding limiting structure (32), and the first locking assembly (34) comprises:
a first locking piece (341) slidably mounted on the mounting casing (31) and configured to slide with respect to the mounting casing (31) so as to be snapped with the first fastening hole (a) or the second fastening hole (b);
a first elastic member (342) of which one end is mounted at an end of the first locking piece (341) away from the folding limiting structure (32) and the other end abuts against an inner wall of the mounting casing, wherein the first elastic member is configured to provide a driving force for driving the first locking piece (341) to slide; and
a pushed button (343) passing through a first straight slot and mounted on the first locking piece (341), configured for a user to operate, and driving the first locking piece (341) to slide away from the first fastening hole (a) or the second fastening hole (b) so as to unlock the folding limiting structure (32).

5. The multi-functional baby carrycot (1) according to claim 4, wherein a protruding portion (321) is disposed on one end of the folding limiting structure (32), and a second elastic member (35) is sleeved outside the protruding portion (321); one end of the second elastic member (35) is fixedly mounted on the folding limiting structure (32), and the other end of the second elastic member (35) is fixedly mounted on the mounting casing (31); and the second elastic member (35) is configured to provide a driving force for automatically unfolding or folding the ISOFIX hard interfaces (33).

6. The multi-functional baby carrycot (1) according to any one of claims 1 to 5, wherein each stroller support (2) comprises
a front wheel (21);
a back wheel (22);
a first support rod (23) mounted on the front wheel (21) at one end;
a second support rod (24) mounted on the back wheel (22) at one end and rotatably mounted to the first support rod (23) and the carrycot (1) at the other end; and
a second locking assembly (25) mounted on the carrycot (1) and configured to unlock the first support rod (23) and the second support rod (24) so that they are rotatable with respect to the carrycot (1), or to lock the first support rod (23) and the second support rod (24) so that they maintain a folded or support state.

7. The multi-functional baby carrycot (1) according to claim 6, wherein a fourth fastening hole (c) and a fifth fastening hole (d) are provided at an interval on one end of the first support rod (23) away from the front wheel (21), a sixth fastening hole (e) and a seventh fastening hole (f) are provided on the second support rod (24), and the carrycot (1) is provided with a first slide groove (h) corresponding to the fourth fastening hole (c); and the second locking assembly (25) comprises:
a second locking piece (251) slidably mounted in the first slide groove (h), and capable of being snapped with the fourth fastening hole (c) and the sixth fastening hole (e) or with the fifth fastening hole (d) and the seventh fastening hole (f) so that the first support rod (23) and the second support rod (24) maintain the support or folded state;
a third elastic member (252) of which one end is mounted at a side of the second locking piece (251) away from the fourth fastening hole (c), and the other end abuts against an inner wall of the first slide groove (h);
a projection (253) fixedly mounted at an end of the second locking piece (251) adjacent to an opening of the first slide groove (h);
a first slider (254) slidably mounted on the carrycot (1), abutting against the projection (253), and configured to slide with respect to the carrycot (1) so as to drive the projection (253) to move;
a first dragging rope (255) connected to the first slider (254); and
a first button (256) mounted on the carrycot (1), connected to the first dragging rope (255), and configured for the user to operate so as to lift the first dragging rope (255) and drive the first slider (254).

8. The multi-functional baby carrycot (1) according to claim 6, wherein the carrycot (1) comprises:
a seat (11) transversely provided with a second through hole (k);
a fixed shaft (12) passing through the second through hole (k) and mounted on the carrycot (1);
a handle (15) rotatably mounted on the fixed shaft (12); and
a third locking assembly (13) partially disposed on the fixed shaft (12) , partially disposed on the handle (15) and configured to lock or unlock the handle (15) so that the handle maintains at a specific angle or is subjected to angle adjustment.

9. The multi-functional baby carrycot (1) according to claim 8, wherein the third locking assembly (13) comprises:
a fixing disk (131) mounted on the fixed shaft (12) and provided with a third arc-shaped groove (m) and an eighth fastening hole (n) communicated with the third arc-shaped groove (m);
a third locking piece (132) mounted on the handle (15) corresponding to the eighth fastening hole (n), and capable of being snapped with or disengaged from the eighth fastening hole (n) so as to lock or unlock the handle (15);
a rotary knob (133) mounted on the handle (15) and configured for the user to operate so as to drive the third locking piece (132) to be disengaged from the eighth fastening hole (n) to unlock the handle (15);
a transmission assembly connected to the rotary knob (133) at one end and connected to the third locking piece (132) at the other end; and
a fourth elastic member (134) mounted between the third locking piece (132) and the fixed shaft (12) at one end, and configured to reset the third locking piece (132) under an effect of its own restoring force.

10. The multi-functional baby carrycot (1) according to claim 9, wherein the transmission assembly comprises:
a lifting lever (135) fixedly mounted on the third locking piece (132) and provided with ninth fastening holes (p);
a cover shell (136) sleeved outside the lifting lever (135);
a second slider (137) slidably mounted on the cover shell (136);
a clasp (138) mounted on the second slider (137) and capable of being snapped with the ninth fastening hole (p);
a third dragging rope (139) connected onto the rotary knob (133) at one end and connected onto the second slider (137) at the other end; and
a fifth elastic member (130) mounted between the second slider (137) and the cover shell (136) and configured to reset the second slider (137) under an effect of its own restoring force;
wherein when rotated, the rotary knob (133) drives the third dragging rope (139) to move, so as to draw the second slider (137) to make it slide with respect to the cover shell (136); then, the second slider (137) drives the clasp (138) to slide towards the lifting lever (135) so that the clasp (138) is snapped with the ninth fastening hole (p), thereby lifting up the lifting lever (135); whereby the third locking piece (132) is lifted to unlock the handle (15).
